# EUROPÄISCHE PATENTSCHRIFT

(11) **EP 4 107 767 B1**
(45) Veröffentlichungstag und Bekanntmachung des Hinweises auf die Patenterteilung: **30.04.2025**
(21) Anmeldenummer: 20768558.7
(22) Anmeldetag: 07.09.2020
(51) Int. Cl.: H01T 4/06, H01H 9/28, H02B 1/21, H01T 4/04, H02H 7/22, H02H 9/06

(54) **ÜBERSPANNUNGSSCHUTZVORRICHTUNG, ÜBERSPANNUNGSSCHUTZBAUGRUPPEN MIT EINER SOLCHEN ÜBERSPANNUNGSSCHUTZVORRICHTUNG SOWIE VERFAHREN ZUR MONTAGE EINER ÜBERSPANNUNGSSCHUTZBAUGRUPPE**
OVERVOLTAGE PROTECTION DEVICE, OVERVOLTAGE PROTECTION ASSEMBLIES HAVING AN OVERVOLTAGE PROTECTION DEVICE OF THIS TYPE, AND METHOD FOR ASSEMBLING AN OVERVOLTAGE PROTECTION ASSEMBLY
DISPOSITIF DE PROTECTION CONTRE LES SURTENSIONS, ENSEMBLES DE PROTECTION CONTRE LES SURTENSIONS COMPORTANT UN TEL DISPOSITIF DE PROTECTION CONTRE LES SURTENSIONS ET PROCÉDÉ D'ASSEMBLAGE D'UN ENSEMBLE DE PROTECTION CONTRE LES SURTENSIONS

(30) Priorität: 19.02.2020 DE 102020104412; 17.03.2020 DE 202020101558 U; 17.03.2020 DE 102020107331
(43) Veröffentlichungstag der Anmeldung: 28.12.2022
(73) Patentinhaber: DEHN SE, 92318 Neumarkt i.d. OPf. (DE)
(72) Erfinder: HIERL, Stephan, 92318 Neumarkt (DE); KRAUSS, Bernhard, 92318 Neumarkt (DE); BROCKE, Ralph, 92318 Neumarkt (DE)
(74) Vertreter: Prinz & Partner mbB
(86) Internationale Anmeldenummer: PCT/EP2020/074973
(87) Internationale Veröffentlichungsnummer: WO 2021/164895

(56) Entgegenhaltungen:
- EP-A1- 1 278 224
- EP-A2- 0 806 784
- DE-U1- 202018 006 111

## Beschreibung

Die Erfindung betrifft eine Überspannungsschutzvorrichtung zur Absicherung eines Niederspannungsversorgungssystems eines Bauwerks gegen Überspannungen. Die Überspannungsschutzvorrichtung umfasst einen Grundkörper, an dem eine Schnittstelle zur elektrischen und mechanischen Kopplung der Überspannungsschutzvorrichtung mit einem mehrere Stromschienen umfassenden Sammelschienensystem vorgesehen ist, und einen am Grundkörper angeordneten Aufnahmebereich, in dem wahlweise ein elektrotechnisches Anbauteil aufnehmbar ist.

Ferner ist die Erfindung auf eine Überspannungsschutzbaugruppe gerichtet, die eine solche Überspannungsschutzvorrichtung und ein elektrotechnisches Anbauteil aufweist, das zumindest teilweise im Aufnahmebereich des Grundkörpers aufgenommen ist.

Darüber hinaus betrifft die Erfindung eine weitere Überspannungsschutzbaugruppe mit einer solchen Überspannungsschutzvorrichtung und einem Blindmodul.

Die Erfindung ist außerdem auf ein Verfahren zur Montage einer Überspannungsschutzbaugruppe mit einer Überspannungsschutzvorrichtung der eingangs genannten Art und einem elektrotechnischen Anbauteil gerichtet, wobei das elektrotechnische Anbauteil zumindest teilweise im Aufnahmebereich des Grundkörpers aufgenommen ist.

Derartige Überspannungsschutzvorrichtungen und damit ausgestattete Überspannungsschutzbaugruppen sind aus dem Stand der Technik bekannt. Gleiches gilt für Verfahren zur Montage einer Überspannungsschutzbaugruppe der genannten Art. Beim zu schützenden Niederspannungsversorgungssystem handelt es sich beispielsweise um ein Leitungssystem in einem Wohnhaus oder in einem Geschäftshaus, das insbesondere vor solchen Überspannungen geschützt werden soll, die aus einem Blitzeinschlag resultieren.

Zu diesem Zweck ist es bekannt, innerhalb von Überspannungsschutzvorrichtungen Überspannungsableiter, zum Beispiel in Form von Funkenstrecken, vorzusehen und miteinander derart zu verschalten, dass an einer oder mehreren der Stromschienen des Sammelschienensystems anliegende Überspannungen zuverlässig in die Erde abgeleitet werden. Die Überspannungen erreichen also nicht das Niederspannungsversorgungssystem.

Zugehörige Schnittstellen zur elektrischen und mechanischen Kopplung der Überspannungsschutzvorrichtung mit einem mehrere Stromschienen umfassenden Sammelschienensystem sind aus der DE 20 2018 104 832 U1, der DE 10 2005 049 873 A1 und der DE 10 2004 037 083 A1 bekannt. Auf die dortigen Erläuterungen wird verwiesen.

Dabei können mittels einer Überspannungsschutzvorrichtung der eingangs genannten Art grundsätzlich zwei alternative Konfigurationen von Überspannungsschutzbaugruppen bereitgestellt werden. Entweder ist im Aufnahmebereich ein elektrotechnisches Anbauteil vorgesehen oder die Überspannungsschutzvorrichtung wird ohne ein solches elektrotechnisches Anbauteil verwendet. Bei dem elektrotechnischen Anbauteil handelt es sich beispielsweise um eine Überstromschutzeinrichtung, die zur Absicherung eines elektronischen Geräts vorgesehen ist, dessen Strombedarf nicht durch einen Stromzähler des Niederspannungsversorgungssystems des Bauwerks erfasst werden soll.

Im ersten Fall muss bei bekannten Überspannungsschutzvorrichtungen eine als separates Teil ausgeführte Anschlussklemme montiert werden, um das elektrotechnische Anbauteil elektrisch mit der Überspannungsschutzvorrichtung koppeln zu können. Im zweiten Fall, also wenn kein elektrotechnisches Anbauteil verwendet wird, muss die Anschlussklemme von der Überspannungsschutzvorrichtung entfernt sein, damit diese berührsicher ist, sodass eine Person keine stromführenden Teile der Überspannungsschutzvorrichtung berühren kann. Ein weiterer Grund für das Entfernen der Anschlussklemme ist, dass diese vor Verschmutzung und anderen unerwünschten Umwelteinflüssen geschützt werden soll. Zudem besteht grundsätzlich ein Platzproblem, welches auch berücksichtigt werden muss.

Die DE 20 2018 006111 U1 offenbart eine Überspannungsschutzvorrichtung, die einen Grundkörper sowie eine Schnittstelle zur elektrischen und mechanischen Kopplung der Überspannungsschutzvorrichtung mit einem Sammelschienensystem umfasst. Ferner ist ein Aufnahmebereich vorgesehen, in dem wahlweise ein elektrotechnisches Anbauteil aufnehmbar ist.

Die EP 0 806 784 A2 beschreibt ein Schaltgerät für den Einbau in einen Schaltschrank, wobei Leitungen vorgesehen sind, um das Schaltgerät mit den Anschlussklemmen eines unmittelbar benachbart angeordneten weiteren Schaltgeräts zu verbinden. Die Leitungen sind relativ zum Schaltgerät längs bewegbar Die Leitungen sind auf einem gemeinsamen Träger angebracht, der zwischen einer ausgefahrenen Position und einer eingefahrenen Position verstellbar ist.

Die Aufgabe der vorliegenden Erfindung besteht nunmehr darin, eine Überspannungsschutzvorrichtung bereitzustellen, die wahlweise mit einem elektrotechnischen Anbauteil versehen werden kann, wobei jedoch der Montageaufwand sowie der Platzbedarf sehr gering sind. Gleichzeitig sollen die bekannten, hohen Sicherheitsstandards insbesondere hinsichtlich der Berührsicherheit beibehalten werden.

Die Aufgabe wird durch eine Überspannungsschutzvorrichtung der eingangs genannten Art gelöst, an deren Grundkörper zumindest eine Kontaktzunge vorgesehen ist, die dazu ausgebildet ist, das wahlweise im Aufnahmebereich anordenbare elektrotechnische Anbauteil elektrisch zu kontaktieren und mechanisch zu sichern. Dabei ist die Kontaktzunge verschiebbar am Grundkörper gelagert. Über die Kontaktzunge kann somit das elektrotechnische Anbauteil in mechanischer und elektrischer Hinsicht zuverlässig mit der Überspannungsschutzvorrichtung gekoppelt werden. Nachdem die Kontaktzunge verschiebbar am Grundkörper gelagert ist, entfällt im Vergleich zum Stand der Technik die Montage eines separaten Kontaktelements. Die Kontaktzunge muss lediglich gegebenenfalls in eine zur Kontaktierung und mechanischen Sicherung vorgesehene Stellung geschoben werden, die als ausgefahrene Stellung bezeichnet wird. Dadurch ergeben sich gegenüber dem Stand der Technik ein deutlich reduzierter Montageaufwand sowie Platzbedarf. Für den Fall, dass kein elektrotechnisches Anbauteil verwendet werden soll, kann die Kontaktzunge ebenfalls in eine hierfür geeignete Stellung verschoben werden, die als zurückgezogene Stellung bezeichnet wird. Auch dies ist mit einem vergleichsweise geringen Aufwand erreichbar. Insbesondere ist die Kontaktzunge in beiden Stellungen gegen unerwünschte Berührungen gesichert, sodass in dieser Hinsicht die gewohnt hohen Sicherheitsstandards eingehalten werden.

Die Kontaktzungen bestehen demnach aus einem elektrisch leitfähigen Material, beispielsweise einem Metall, sodass das elektrotechnische Anbauteil elektrisch kontaktiert werden kann.

Gemäß einer Ausführungsform ragt die Kontaktzunge in einer ausgefahrenen Stellung zumindest abschnittsweise in den Aufnahmebereich und ist in einer zurückgezogenen Stellung vollständig innerhalb des Grundkörpers aufgenommen. Die Kontaktzunge wird in ihrer ausgefahrenen Stellung verwendet, wenn das elektrotechnische Anbauteil elektrisch kontaktiert und mechanisch gesichert werden soll. Indem die Kontaktzunge in den Aufnahmebereich ragt, werden diese Funktionen zuverlässig erfüllt. Die zurückgezogene Stellung wird vorzugsweise dann verwendet, wenn im Aufnahmebereich kein elektrotechnisches Anbauteil verwendet wird. Da die Kontaktzunge vollständig innerhalb des Grundkörpers aufgenommen ist, ist sie vor unerwünschten Berührungen geschützt. Dadurch erfüllt die Überspannungsschutzvorrichtung die gewohnt hohen Sicherheitsstandards hinsichtlich der Berührsicherheit. Darüber hinaus ist die Kontaktzunge in ihrer zurückgezogenen Stellung auch gegenüber Verschmutzung und anderen unerwünschten Umwelteinflüssen geschützt. Es versteht sich, dass die Kontaktzunge in ihrer zurückgezogenen Stellung außerhalb des Aufnahmebereichs liegt.

Insbesondere ist im Grundkörper eine Führung vorgesehen, entlang derer die Kontaktzunge zwischen der zurückgezogenen Stellung und der ausgefahrenen Stellung verschoben werden kann. Hierdurch ergibt sich eine definierte Bewegung der Kontaktzunge zwischen den beiden Stellungen. Die beiden Stellungen können Endstellungen der Kontaktzunge entlang der Führung entsprechen.

Die Kontaktzunge kann in der zurückgezogenen Stellung durch eine beweglich am Grundkörper gelagerte Abdeckung vom Aufnahmebereich getrennt sein. Die Kontaktzunge ist somit in ihrer zurückgezogenen Stellung besonders zuverlässig vor unerwünschter Berührung sowie vor Verschmutzung geschützt. Dabei kann die Abdeckung in Richtung einer Trennstellung, d.h. einer Stellung, in der sie die Kontaktzunge vom Aufnahmebereich trennt, federbelastet sein. Dadurch nimmt die Abdeckung in zuverlässiger Weise die Trennstellung ein, wenn sich die Kontaktzunge in der zurückgezogenen Stellung befindet. Mit anderen Worten ergibt sich durch die federbelastete Abdeckung eine selbsttätige Trennung bzw. ein selbsttätiger Berührungsschutz, da die Abdeckung in die Trennstellung verstellt wird.

Gemäß einer Variante ist die Abdeckung so gestaltet sein, dass sie durch Einsetzen des elektrotechnischen Anbauteils in den Aufnahmebereich ausgehend von ihrer Trennstellung in eine Freigabestellung verschoben wird, sodass sie eine Öffnung freigibt, über die die Kontaktzunge in der ausgefahrenen Stellung in den Aufnahmebereich ragt. In der Freigabestellung ist die Trennung zwischen der Kontaktzunge und dem Aufnahmebereich demnach aufgehoben. Dies erfolgt gegebenenfalls entgegen der Federvorspannung, da das elektronische Anbauteil die Abdeckung entgegen der Federkraft in die Freigabestellung verstellt. Die Abdeckung verursacht also keinen zusätzlichen Aufwand beim Montieren des elektrotechnischen Anbauteils. Bevorzugt verläuft dabei eine die Trennstellung und die Freigabestellung verbindende Bewegungsrichtung der Abdeckung im Wesentlichen senkrecht zu einer Verschieberichtung der Kontaktzunge.

Wenn das elektrotechnische Anbauteil entfernt und die Kontaktzunge in ihre zurückgezogene Stellung überführt werden, drückt die Feder aufgrund ihrer Federvorspannung die Abdeckung wieder zurück in die Trennstellung, in der die Abdeckung die Öffnung verdeckt.

In einer besonders bevorzugten Ausführungsform ist die beweglich am Grundkörper gelagerte Abdeckung als Schieber ausgeführt. Weiter bevorzugt ist der Schieber in die zugeordnete Trennstellung federbelastet.

In einer Variante ist zudem eine Rastvorrichtung vorgesehen, die dazu ausgebildet ist, die Kontaktzunge in der ausgefahrenen Stellung und/oder in der zurückgezogenen Stellung zu arretieren. Dabei wird mittels der Rastvorrichtung ein mechanisch spürbarer Widerstand erzeugt, wenn die Kontaktzunge die zurückgezogene Stellung oder die ausgefahrene Stellung erreicht. Gleichzeitig ist eine gewisse Kraft nötig, um die Kontaktzunge aus der ausgefahrenen Stellung bzw. aus der zurückgezogenen Stellung heraus zu verschieben. Auf diese Weise wird erreicht, dass die Kontaktzunge nicht aus Versehen aus der zurückgezogenen oder ausgefahrenen Stellung verschoben wird, insbesondere sich nicht selbsttätig aus der entsprechenden Stellung löst. Gleichzeitig stellt die Rastvorrichtung beim manuellen Verschieben eine Rückmeldung bereit, dass die Kontaktzunge die gewünschte Stellung erreicht hat. Dies dient der sicheren elektrischen Kontaktierung und mechanischen Sicherung des Anbauteils an der Überspannungsschutzvorrichtung.

In diesem Zusammenhang kann die Rastvorrichtung eine am Grundkörper angeordnete Rastkontur und eine an der Kontaktzunge ausgebildete Rastgegenkontur umfassen. Insbesondere ist die Rastkontur in Richtung der Rastgegenkontur federnd gelagert. Eine solche Rastvorrichtung stellt in zuverlässiger Weise die oben genannten Funktionen bereit. Gleichzeitig ist sie einfach und zuverlässig aufgebaut und lässt sich leicht herstellen. In einer besonders bevorzugten Variante ist die Rastkontur durch einen integral mit dem Grundkörper hergestellten, federnden Rastarm gebildet. Ein solcher Aufbau ist besonders einfach und daher besonders kostengünstig herstellbar.

Auch kann eine Fixiereinheit vorgesehen sein, die dazu ausgebildet ist, die Kontaktzunge in einer beliebigen Verschiebestellung festzulegen. Die Fixiereinheit wirkt dabei zusätzlich zu einer eventuell vorhandenen Rastvorrichtung. Im Unterschied zur Rastvorrichtung kann die Kontaktzunge aus einer mittels der Fixiereinheit festgelegten Stellung nicht mehr verschoben werden, ohne dass die Fixiereinheit in einen Freigabezustand überführt wird. Das Festlegen erfolgt bevorzugt in der zurückgezogenen Stellung bzw. in der ausgefahrenen Stellung. Damit kann das Anbauteil elektrisch und mechanisch zuverlässig mit der Überspannungsschutzvorrichtung gekoppelt werden. Die Fixiereinheit stellt demnach eine mechanische Sicherung für die Kontaktzunge dar, wodurch sichergestellt ist, dass die Kontaktzunge in ihrer entsprechenden Position bzw. Stellung verbleibt und nicht unbeabsichtigt verschoben wird.

Bevorzugt umfasst die Fixiereinheit ein Befestigungsmittel, insbesondere eine Befestigungsschraube, mittels dem die Kontaktzunge an einer innerhalb des Grundkörpers feststehenden Kontaktbasis wahlweise festlegbar ist und mittels dem eine Verschiebung der Kontaktzunge gegenüber der feststehenden Kontaktbasis wahlweise freigebbar ist. Insbesondere ist das Befestigungsmittel mittels eines Werkzeugs betätigbar. Mit anderen Worten wird das Werkzeug verwendet, um das Befestigungsmittel zu lösen oder festzuziehen, sodass die Fixiereinheit die Kontaktzunge freigibt bzw. sichert. Für den Fall, dass das Befestigungsmittel eine Befestigungsschraube ist, ist diese mit einem Schraubendreher betätigbar. Das Befestigungsmittel ist vorteilhafterweise am Grundkörper versenkt, sodass es nur mittels des zugehörigen Werkzeugs erreichbar ist. Dadurch ergibt sich wiederum ein zuverlässiger Schutz vor unbeabsichtigter Berührung.

In einer Weiterbildung ist am Befestigungsmittel zudem eine Angriffsfläche zum Verschieben der zugehörigen Kontaktzunge vorgesehen. Die Kontaktzunge kann also über diese Angriffsfläche verschoben werden, unmittelbar nachdem die Kontaktzunge über das Befestigungsmittel freigegeben wurde, wodurch die Kontaktzunge verschoben werden kann. Das ist besonders aufwandsarm, da das Werkzeug zum Lösen des Befestigungsmittels direkt verwendet werden kann, um die Kontaktzunge zu verschieben. Insbesondere ist dabei die Angriffsfläche zum Verschieben der Kontaktzunge ein Bestanteil einer Angriffskontur für das Werkzeug zum Betätigen des Befestigungsmittels. Für den Fall, dass das Befestigungsmittel eine Befestigungsschraube ist, kann eine Angriffskontur für das Werkzeug schlitz- oder kreuzförmig ausgebildet sein. Diese dient dann gleichzeitig dazu, die Kontaktzunge mittels des verwendeten Schraubendrehers zu verschieben.

Gemäß einer Alternative ist an der Kontaktzunge eine Angriffsfläche vorgesehen, die zum Verschieben der Kontaktzunge am Grundkörper ausgebildet ist. Eine derartige Angriffsfläche liegt insbesondere unabhängig von einer eventuell am Befestigungsmittel vorhandenen Angriffsfläche vor. Damit lässt sich die Kontaktzunge einfach und präzise verschieben. Vorzugsweise ist auch diese Angriffsfläche derart innerhalb des Grundkörpers versenkt, dass sie nur mittels eines Werkzeugs, zum Beispiel eines Schraubendrehers, erreichbar ist. Dadurch ist die Angriffsfläche vor unerwünschten Berührungen geschützt.

In einer Variante steht die Angriffsfläche im Wesentlichen senkrecht zur Verschieberichtung der Kontaktzunge von dieser ab. Dadurch lässt sich die Angriffsfläche leicht erreichen. Ferner liegt eine derartige Angriffsfläche hinsichtlich des zur Verschiebung der Kontaktzunge notwendigen Kraftflusses vorteilhaft angeordnet. Weiter bevorzugt sind die Kontaktzunge und die Angriffsfläche einstückig miteinander ausgebildet, das heißt es liegt ein monolithisch ausgebildetes Bauteil vor, dass die Kontaktzunge und die Angriffsfläche umfasst. Dabei kann es sich bei der Angriffsfläche um eine Fläche eines endseitig umgeformten Abschnitts der Kontaktzunge handeln. Dieser Aufbau ist besonders einfach und dadurch kostengünstig.

Die Kontaktzunge kann federbeaufschlagt verschiebbar am Grundkörper vorgesehen sein. Dabei kann die Kontaktzunge entweder in ihre ausgefahrene Stellung oder in ihre zurückgezogene Stellung federbeaufschlagt sein. Es reicht also bei einer derartigen Kontaktzunge aus, diese zum Verschieben in die ausgefahrene bzw. die zurückgezogene Stellung hinsichtlich ihrer Verschiebbarkeit freizugeben. Ein aktives Verschieben ist aufgrund der Federbelastung dann nicht notwendig. Eine Betätigung der Kontaktzunge ist dadurch vergleichsweise einfach.

Insofern kann das elektronische Anbauteil in den Aufnahmebereich eingesetzt werden, wodurch dieses die Abdeckung entgegen der Federvorspannung aus der Trennstellung in die Freigabestellung überführt. In der Trennstellung ist die Kontaktzunge gegen die Abdeckung federbeaufschlagt, sodass ihre Spitze an der Abdeckung anliegt. Wenn das elektronische Anbauteil beim Einsetzen in den Aufnahmebereich die Abdeckung soweit verstellt hat, dass die Öffnung freigegeben wird, könnte die Kontaktzunge aufgrund der Federbelastung automatisch in die ausgefahrene Stellung verstellt werden. In Abhängigkeit der Ausgestaltung des elektronischen Anbauteils kann die Spitze der Kontaktzunge aber zunächst an einer Außenseite des elektronischen Anbauteils anliegen, bis dieses soweit in den Aufnahmebereich eingesetzt ist, dass eine seitliche Einführöffnung mit der Öffnung fluchtet, durch die sich die Kontaktzunge erstreckt. Dann wird die Kontaktzunge aufgrund der Federvorspannung automatisch in die Einführöffnung des elektronischen Anbauteils verstellt, wodurch die Kontaktzunge das elektronische Anbauteil elektrisch kontaktiert und gleichzeitig mechanisch sichert.

Sofern keine Abdeckung vorgesehen ist, kann die Kontaktzunge aber auch dann selbsttätig, also aufgrund der Federvorspannung, in die ausgefahrene Stellung überführt werden, indem nach dem Einsetzen des elektronischen Anbauteils die Fixiereinheit (manuell) betätigt wird, sodass die entsprechende Kontaktzunge freigegeben wird. Mit anderen Worten kann die Feder dann die Kontaktzunge in die ausgefahrene Stellung beaufschlagen, da die Kontaktzunge nicht mehr durch die Fixiereinheit festgelegt ist. Die Kontaktzunge wird dann über die Feder in die Einführöffnung des elektronischen Anbauteils verstellt, wodurch das elektronische Anbauteil elektrisch kontaktiert und mechanisch gesichert ist.

Gemäß einer Variante ist am Grundkörper ein elektrischer Versorgungsanschluss angeordnet. Insbesondere ist der elektrische Versorgungsanschluss mit der Kontaktzunge elektrisch in Reihe geschaltet. Ein solcher Versorgungsanschluss dient insbesondere dem Anschluss eines Smart Meters bzw. Routers oder einem sonstigen Gerät, dessen Strombedarf nicht durch den Stromzähler des Niederspannungsversorgungssystems des Bauwerks erfasst werden soll. Typischerweise ist ein Gerät eines Netzbetreibers, Stromlieferanten oder Versorgungsdienstleisters über den Versorgungsanschluss angeschlossen. Derartige Geräte können somit in platzsparender und zuverlässiger Weise mit der notwendigen elektrischen Energie versorgt und gleichzeitig abgesichert werden.

Es können auch zwei verschiebbar am Grundkörper gelagerte Kontaktzungen vorgesehen sein. Insbesondere sind die Kontaktzungen an entgegengesetzten Enden des Aufnahmebereichs angeordnet. Die Kontaktzungen können beispielsweise als Pluspol und Minuspol oder als Nullleiter und Phase ausgebildet sein. Bevorzugt sind sie in geometrischer Hinsicht identisch ausgebildet. Es lässt sich so eine große Bandbreite an elektrotechnischen Anbaugeräten mit elektrischer Energie versorgen und mechanisch an der Überspannungsschutzvorrichtung sichern.

Die Aufgabe wird ferner durch eine Überspannungsschutzbaugruppe gelöst, die eine erfindungsgemäße Überspannungsschutzvorrichtung und ein elektrotechnisches Anbauteil aufweist, das zumindest teilweise im Aufnahmebereich des Grundkörpers aufgenommen und über die zumindest eine Kontaktzunge elektrisch mit der Überspannungsschutzvorrichtung gekoppelt und mechanisch gesichert ist. Dabei befindet sich die zumindest eine Kontaktzunge in ihrer ausgefahrenen Stellung. Auf diese Weise ist das elektrotechnische Anbauteil sowohl in elektrischer als auch in mechanischer Hinsicht zuverlässig mit der Überstromschutzvorrichtung gekoppelt. Ebenfalls lässt sich das elektrotechnische Anbauteil aufwandsarm an der Überspannungsschutzvorrichtung montieren.

Das elektrotechnische Anbauteil kann ein Leitungsschutzschalter oder eine Überstromschutzeinrichtung sein. Unter einem Leitungsschutzschalter wird auch ein Sicherungsautomat verstanden. Somit können entweder Smart Meter, Router oder ein sonstiges Gerät, dessen Strombedarf nicht durch den Stromzähler des Niederspannungsversorgungssystems des Bauwerks erfasst werden soll, vor zu hohen Strömen und/oder Spannungen geschützt werden. Typischerweise handelt es sich dabei um ein Gerät eines Netzbetreibers, Stromlieferanten oder Versorgungsdienstleisters.

Zudem können eine Abdeckung des elektrotechnischen Anbauteils und die Überspannungsschutzvorrichtung über eine Plombe miteinander verbunden sein. Bei der Abdeckung kann es sich um eine transparente Abdeckung, auch Klarsicht-Abdeckung genannt, handeln, die den direkten Zugang zum elektrotechnischen Anbauteil und somit eine Manipulation verhindert. Grundsätzlich kann so verhindert werden, dass Unberechtigte bzw. Unbefugte das elektrotechnische Anbauteil bedienen. Das elektrotechnische Anbauteil kann also nur unter Beschädigung der Plombe von der Überspannungsschutzvorrichtung getrennt werden, da hierzu zunächst die Abdeckung entfernt werden müsste, die jedoch über die Plombe mit der Überspannungsschutzvorrichtung verbunden ist. Es kann somit auf einfache Weise eine Manipulation der Überspannungsschutzbaugruppe und/oder des elektrotechnischen Anbauteils erkannt werden.

Die Aufgabe wird darüber hinaus von einer Überspannungsschutzbaugruppe gelöst, die eine erfindungsgemäße Überspannungsschutzvorrichtung und ein Blindmodul aufweist, das zumindest teilweise im Aufnahmebereich des Grundkörpers aufgenommen ist, wobei sich die zumindest eine Kontaktzunge in ihrer zurückgezogenen Stellung befindet. Das Blindmodul weist bevorzugt keine elektrischen Komponenten auf, sodass es in elektrischer Hinsicht nicht mit der Überspannungsschutzvorrichtung verbunden ist. Die mechanische Kopplung des Blindmoduls mit der Überspannungsschutzvorrichtung erfolgt nicht über die Kontaktzunge, sondern über separate Mittel. Durch die Aufnahme des Blindmoduls im Aufnahmebereich kann dort kein elektrotechnisches Anbauteil aufgenommen werden. Somit werden durch das Blindmodul eine Manipulation sowie eine Fehlbedienung der Überspannungsschutzvorrichtung zuverlässig vermieden. Darüber hinaus stellt das Blindmodul einen zusätzlichen Berührungsschutz für die Komponenten der Überspannungsschutzvorrichtung dar.

In einer bevorzugten Variante ist das Blindmodul mit der Überspannungsschutzvorrichtung verplombt, sodass es ausschließlich durch Aufbrechen der Plombe vom Überspannungsschutzvorrichtung entfernt werden kann. Es kann somit auf einfache Weise eine Manipulation der Überspannungsschutzbaugruppe erkannt werden.

Darüber hinaus gelten die hinsichtlich der Überspannungsschutzvorrichtung erläuterten Effekte und Vorteile auch für die beiden Überspannungsschutzbaugruppen und umgekehrt.

Grundsätzlich kann eine Manipulationsschutzvorrichtung vorgesehen sein, die zumindest mit dem Grundkörper gekoppelt ist, um eine Manipulation der Überspannungsschutzvorrichtung, des elektrotechnischen Anbauteils und/oder des Versorgungsanschlusses zu verhindern. Beispielsweise wird so verhindert, dass der am Versorgungsanschluss anliegende Strom unautorisiert abgegriffen wird.

Die Aufgabe wird zusätzlich durch ein Verfahren der eingangs genannten Art zur Montage einer Überspannungsschutzbaugruppe gelöst, das die folgenden Schritte umfasst:
a) Vorsehen einer erfindungsgemäßen Überspannungsschutzvorrichtung, wobei sich die Kontaktzunge in ihrer zurückgezogenen Stellung befindet oder in ihre zurückgezogene Stellung überführt wird,
b) anschließendes Anordnen des elektrotechnischen Anbauteils im Aufnahmebereich des Grundkörpers der Überspannungsschutzvorrichtung, und
c) darauffolgendes Überführen der Kontaktzunge in ihre ausgefahrene Stellung, sodass das elektrotechnische Anbauteil elektrisch mit der Überspannungsschutzvorrichtung gekoppelt und mechanisch gesichert wird.

Das elektrotechnische Anbauteil lässt sich somit mit vergleichsweise geringem Montageaufwand an der Überspannungsschutzvorrichtung anbringen. Dabei ist eine zuverlässige Kopplung in mechanischer und elektrischer Hinsicht gewährleistet.

Ferner gelten die im Zusammenhang mit der Überspannungsschutzvorrichtung und den Überspannungsschutzbaugruppen erläuterten Effekte und Vorteile auch für das Verfahren und umgekehrt.

Die Erfindung wird nachstehend anhand verschiedener Ausführungsbeispiele erläutert, die in den beigefügten Zeichnungen gezeigt sind. Es zeigen:
- Figur 1 eine erfindungsgemäße Überspannungsschutzbaugruppe mit einer erfindungsgemäßen Überspannungsschutzvorrichtung und einem elektrotechnischen Anbauteil, wobei die Überspannungsschutzbaugruppe mittels eines erfindungsgemäßen Verfahrens montiert werden kann,
- Figur 2 die Überspannungsschutzvorrichtung der Überspannungsschutzbaugruppe aus Figur 1 in einer separaten Darstellung,
- Figur 3 eine der Figur 2 entsprechende Ansicht der Überspannungsschutzvorrichtung, wobei ein Grundkörper der Überspannungsschutzvorrichtung teilweise geschnitten dargestellt ist,
- Figur 4 ein Detail IV der Überspannungsschutzvorrichtung aus Figur 3,
- Figur 5 eine andere erfindungsgemäße Überspannungsschutzbaugruppe mit einer erfindungsgemäßen Überspannungsschutzvorrichtung und einem Blindmodul,
- Figur 6 die Überspannungsschutzvorrichtung der Überspannungsschutzbaugruppe aus Figur 5 in einer separaten Darstellung,
- Figur 7 eine der Figur 6 entsprechende Ansicht der Überspannungsschutzvorrichtung, wobei ein Grundkörper der Überspannungsschutzvorrichtung teilweise geschnitten dargestellt ist,
- Figur 8 ein Detail VIII der Überspannungsschutzvorrichtung aus Figur 7,
- Figur 9 eine perspektivische Ansicht eines Abschnitts der Überspannungsschutzvorrichtung aus Figur 7 entlang einer Richtung IX, wobei eine Kontaktbasis transparent dargestellt und ein Grundkörper teilweise geschnitten ist,
- Figur 10 eine Draufsicht auf das Detail aus Figur 9 entlang einer Richtung X in Figur 7, wobei eine Kontaktbasis transparent dargestellt und ein Grundkörper teilweise geschnitten ist,
- Figur 11 eine Ansicht des Details aus Figur 10 entlang der Richtung XI,
- Figur 12 und Figur 13 schematisch eine Betätigung einer Kontaktzunge der erfindungsgemäßen Überspannungsschutzvorrichtung aus den Figuren 1 bis 11 über eine an der Kontaktzunge vorgesehene Angriffsfläche,
- Figur 14 und 15 schematisch eine Betätigung einer Kontaktzunge der erfindungsgemäßen Überspannungsschutzvorrichtung aus den Figuren 1 bis 11 über eine an einem Befestigungsmittel vorgesehene Angriffsfläche,
- Figuren 16 und 17 jeweils einen Abschnitt einer erfindungsgemäßen Überspannungsschutzvorrichtung gemäß einer alternativen Ausführungsform in unterschiedlichen Zuständen, und
- Figur 18 die Überspannungsschutzvorrichtung aus den Figuren 16 und 17 während der Montage eines elektrotechnischen Anbauteils zum Bilden einer erfindungsgemäßen Überspannungsschutzbaugruppe.

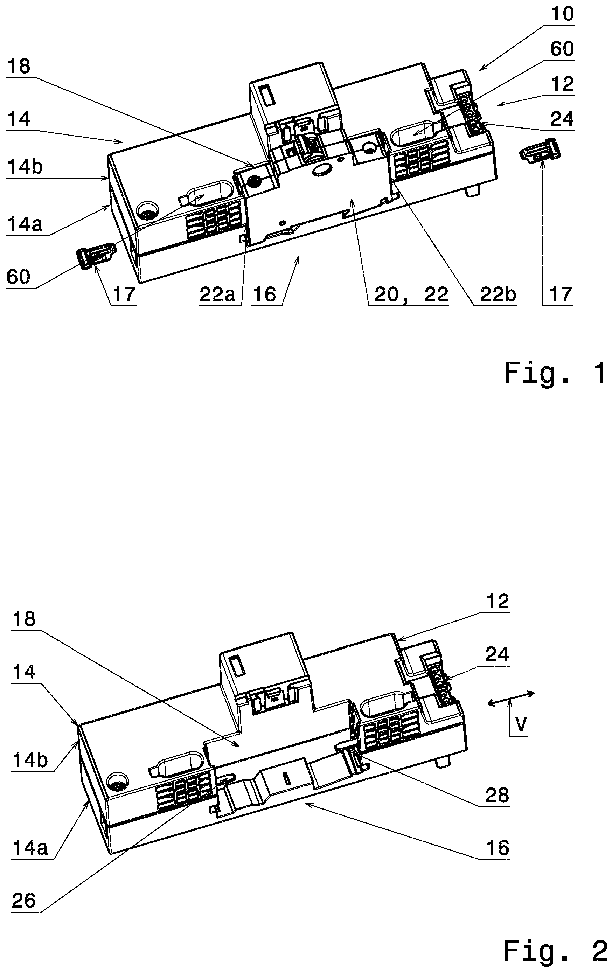

Figur 1 zeigt eine Überspannungsschutzbaugruppe 10, die eine Überspannungsschutzvorrichtung 12 aufweist, die der Absicherung eines Niederspannungsversorgungssystems eines Bauwerks gegen Überspannungen dient.

Die Überspannungsschutzvorrichtung 12 umfasst einen Grundkörper 14, der in der dargestellten Ausführungsform im Wesentlichen aus zwei Körperteilen 14a, 14b gebildet ist.

Am Grundkörper 14, genauer gesagt an einer in Figur 1 unten dargestellten Seite der Körperhälfte 14a ist eine Schnittstelle 16 zur elektrischen und mechanischen Kopplung der Überspannungsschutzvorrichtung 12 mit einem mehrere Stromschienen umfassenden Sammelschienensystem angeordnet. Derartige Schnittstellen 16 sind an sich bekannt, sodass diese im Folgenden nicht im Detail erläutert werden.

Zudem sind Koppelelemente 17 vorgesehen, über die die Überspannungsschutzvorrichtung 12 mit dem Sammelschienensystem mechanisch gekoppelt werden kann.

Der Grundkörper 14 weist darüber hinaus einen Aufnahmebereich 18 auf, in dem bei der in Figur 1 dargestellten Ausführungsform der Überspannungsschutzbaugruppe 10 ein elektrotechnisches Anbauteil 20 in Form eines Leitungsschutzschalters 22 aufgenommen ist. Ein solcher Leitungsschutzschalter 22 kann auch als Sicherungsautomat bezeichnet werden.

Der Aufnahmebereich 18 ist durch eine (seitliche) Aussparung am Grundkörper 14 ausgebildet, sodass das elektrotechnische Anbauteil 20 eingesetzt werden kann.

Ferner ist am Grundkörper 14 ein elektrischer Versorgungsanschluss 24 angeordnet, der in der Figur 1 lediglich schematisch dargestellt ist.

Über einen derartigen Versorgungsanschluss 24 lässt sich beispielsweise ein nicht näher dargestelltes Smart Meter oder anderes elektrisches Gerät mit elektrischem Strom versorgen.

In der Überspannungsschutzbaugruppe 10 ist der elektrische Versorgungsanschluss 24 mit dem Leitungsschutzschalter 22 elektrisch in Reihe geschaltet. Der Leitungsschutzschalter 22 dient somit dazu, den elektrischen Versorgungsanschluss 24 und daran angeschlossene Geräte vor zu hohen Strömen und/oder Spannungen zu schützen.

Ferner ist der Leitungsschutzschalter 22 über zwei verschiebbar am Grundkörper 14 gelagerte Kontaktzungen 26, 28 elektrisch mit der Überspannungsschutzvorrichtung 12 gekoppelt und mechanisch an der Überspannungsschutzvorrichtung 12 gesichert (vgl. Figuren 2 bis 4).

Die Kontaktzungen 26, 28 sind in geometrischer Hinsicht identisch aufgebaut.

Zudem sind die Kontaktzungen 26, 28 an entgegengesetzten Enden des Aufnahmebereichs 18 positioniert, sodass sich die Kontaktzungen 26, 28, insbesondere ihre Spitzen, gegenüberliegen.

Sofern der Leistungsschutzschalter 22 in den Aufnahmebereich 18 eingesetzt ist, befinden sich die Kontaktzungen 26, 28 in einer ausgefahrenen Stellung.

In dieser Stellung ragen die Kontaktzungen 26, 28 in den Aufnahmebereich 18 und kontaktieren so am Leitungsschutzschalter 22 vorgesehene Anschlusskontakte, sodass sie den Leitungsschutzschalter 22 entsprechend elektrisch kontaktieren und gleichzeitig mechanisch sichern.

Die Anschlusskontakte sind in von Seitenflächen 22a, 22b des Leitungsschutzschalters 22 ausgehenden Kanälen bzw. Einführöffnungen gegenüber einer Außenkontur des Leitungsschutzschalters 22 versenkt angeordnet.

Die Kontaktzungen 26, 28 greifen somit in ihrer ausgefahrenen Stellung in diese Kanäle ein und sichern so den Leitungsschutzschalter 22 formschlüssig an der Überspannungsschutzvorrichtung 12. Mit anderen Worten kann der Leitungsschutzschalter 22 aufgrund der Sicherung durch die Kontaktzungen 26, 28 weder aus dem Aufnahmebereich 18 entfernt noch innerhalb des Aufnahmebereichs 18 gekippt oder verschoben werden.

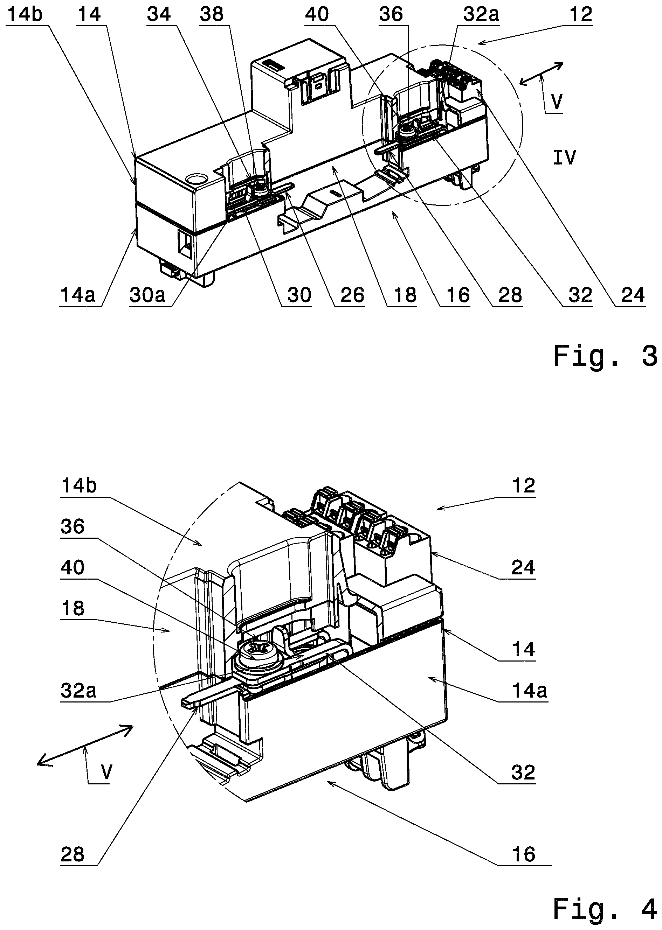

Um die Verschiebbarkeit der Kontaktzungen 26, 28 am Grundkörper 14 zu gewährleisten, ist für jede der Kontaktzungen 26, 28 eine innerhalb des Grundkörpers 14 feststehende Kontaktbasis 30, 32 vorgesehen, die in den Figuren 3 und 4 näher gezeigt sind.

Jede Kontaktbasis 30, 32 ist mit einer Längsführung 30a, 32a in Form eines Langlochs ausgestattet, entlang derer sich die Kontaktzungen 26, 28 verschieben lassen. Die Verschieberichtung ist dabei mit V bezeichnet.

Ferner umfasst die Überspannungsschutzvorrichtung 12 für jede der Kontaktzungen 26, 28 eine Fixiereinheit 34, 36, die jeweils dazu ausgebildet ist, die zugehörige Kontaktzunge 26, 28 in einer beliebigen Verschiebestellung an der zugeordneten Kontaktbasis 30, 32 festzulegen. Ferner kann mittels der Fixiereinheiten 34, 36 eine Verschiebbarkeit der jeweils zugeordneten Kontaktzunge 26, 28 freigegeben werden.

Die Fixiereinheit 34 umfasst zu diesem Zweck ein erstes Befestigungsmittel 38 in Form einer Befestigungsschraube, das die Führung 30a durchgreift und derart in die Kontaktzunge 26 eingedreht ist, dass die Kontaktzunge 26 an der Kontaktbasis 30 durch drehen der Befestigungsschraube wahlweise festgeklemmt werden kann.

Die Fixiereinheit 36 umfasst ein zweites Befestigungsmittel 40 in Form einer Befestigungsschraube, das die Führung 32a durchgreift und wiederum so in die Kontaktzunge 28 eingedreht ist, dass die Kontaktzunge 28 an der Kontaktbasis 32 durch Drehen der Befestigungsschraube wahlweise festgeklemmt werden kann.

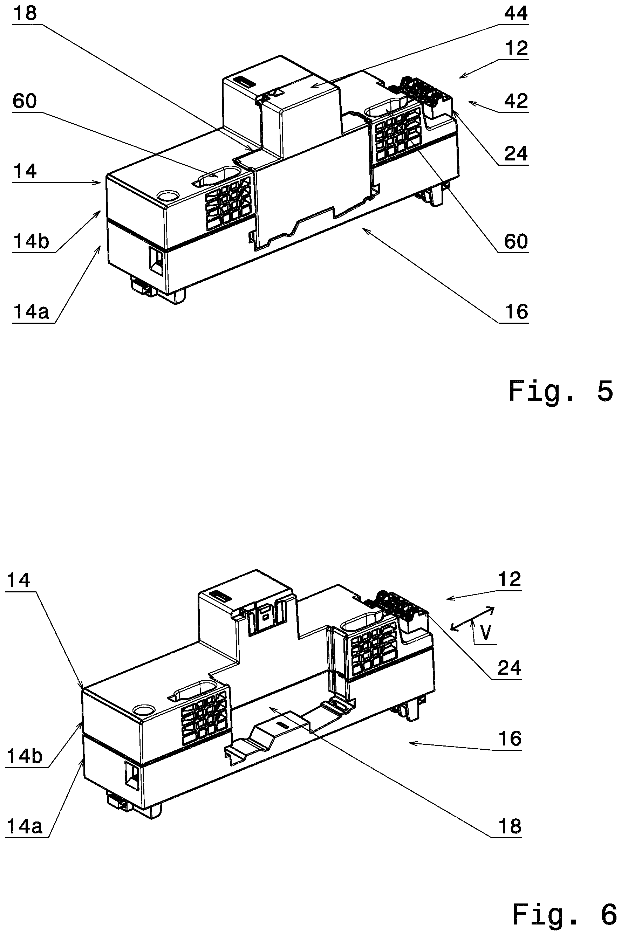

Eine weitere Überspannungsschutzbaugruppe 42 ist in den Figuren 5 bis 11 gezeigt.

Diese ist im Wesentlichen aus der Überspannungsschutzvorrichtung 12, die bereits im Zusammenhang mit der Überspannungsschutzbaugruppe 10 erläutert wurde, und einem Blindmodul 44 aufgebaut.

Das Blindmodul 44 ist im Aufnahmebereich 18 aufgenommen und verhindert dadurch, dass fälschlicherweise ein elektrotechnisches Anbauteil 20 in diesen eingeschoben wird. Darüber hinaus stellt das Blindmodul 44 einen Schutz gegen Verschmutzung dar.

Das Blindmodul 44 ist insbesondere ohne elektrotechnische Komponenten ausgeführt.

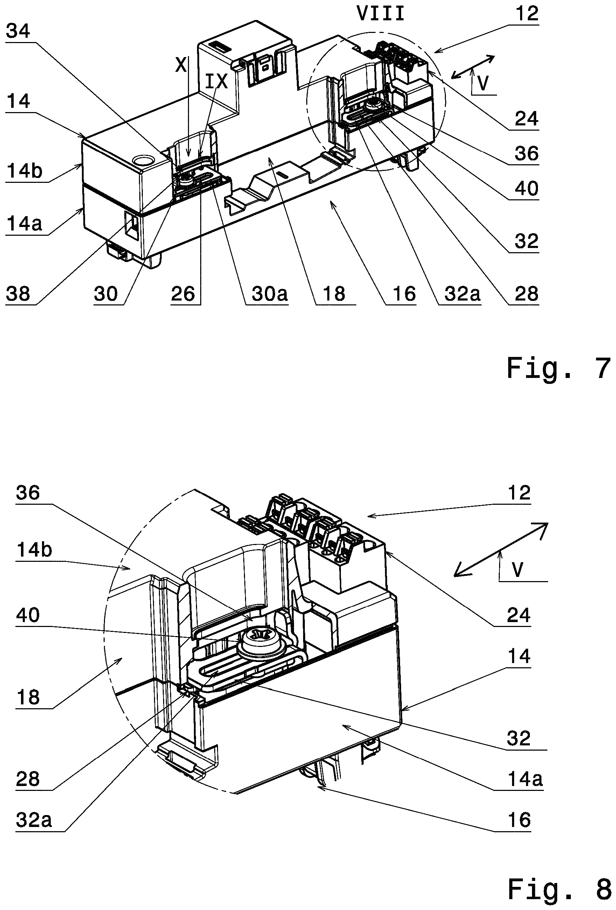

Damit das Blindmodul 44 in den Aufnahmebereich 18 eingesetzt werden kann, befinden sich die Kontaktzungen 26, 28 jeweils in einer zurückgezogenen Stellung, in der sie jeweils vollständig im Grundkörper 14 aufgenommen sind (siehe insbesondere Figuren 7 und 8).

Die Kontaktzungen 26, 28 können in diesem Zusammenhang jeweils mittels einer nicht näher dargestellten Feder in die zurückgezogene Stellung vorgespannt sein. In diesem Falle würde es zum Überführen der Kontaktzungen 26, 28 in ihre jeweils zurückgezogene Stellung genügen, die Befestigungsmittel 38, 40 zu lösen und somit die Verschiebbarkeit der Kontaktzungen 26, 28 freizugeben. Andernfalls müssen die Kontaktzungen 26, 28 manuell in die jeweils zurückgezogene Stellung überführt werden, wie später noch erläutert werden wird.

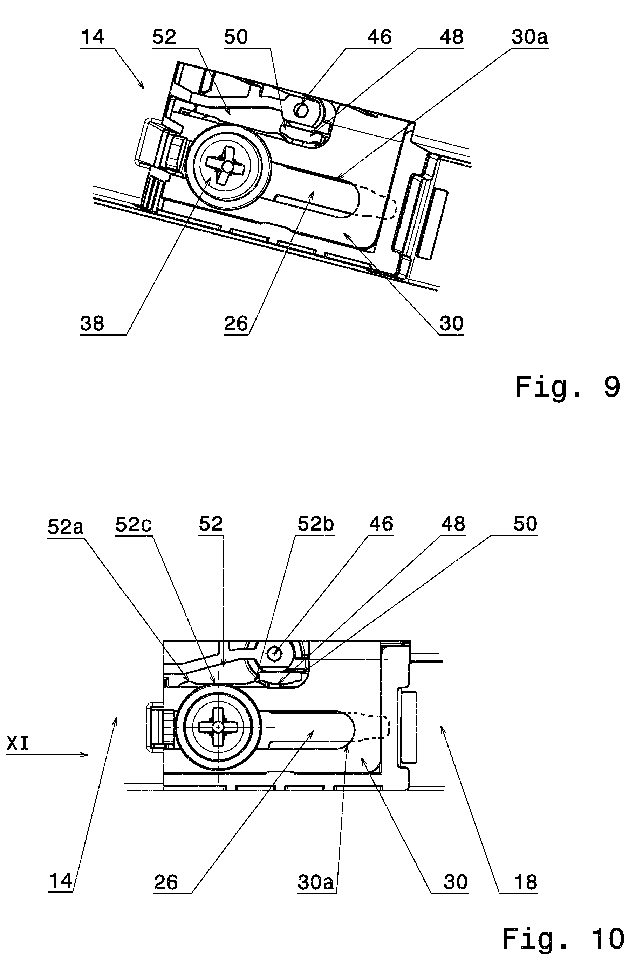

Die Kontaktzungen 26, 28 sind ferner jeweils mit einer Rastvorrichtung 46 gekoppelt, mittels derer sie in der ausgefahrenen Stellung und in der zurückgezogenen Stellung arretiert werden können, wie aus den Figuren 9 und 10 hervorgeht.

Somit wird verhindert, dass die Kontaktzungen 26, 28 in unbeabsichtigter Weise manuell verschoben werden.

Ferner stellt die Rastvorrichtung 46 bei einer manuellen Verschiebung der Kontaktzungen 26, 28 beim Erreichen der zurückgezogenen Stellung sowie der ausgefahrenen Stellung einen erhöhten Verschiebewiderstand bereit, sodass das Erreichen der jeweiligen Stellung spürbar ist.

Die Rastvorrichtung 46 wird exemplarisch in Zusammenwirkung mit der Kontaktzunge 26 erläutert (vgl. Figuren 9 bis 11).

In diesem Zusammenhang ist am Grundkörper 14 eine Rastkontur 48 angeordnet, die in Richtung der Kontaktzunge 26 vorspringt.

Die Rastkontur 48 ist zudem am Ende eines federnden Rastarms 50 positioniert.

Sie wirkt mit einer Rastgegenkontur 52 zusammen, die an der Kontaktzunge 26 ausgebildet ist.

Die Rastgegenkontur 52 umfasst in diesem Zusammenhang einen ersten Vorsprung 52a, einen zweiten Vorsprung 52b und einen dazwischenliegenden, im Wesentlichen ebenen Abschnitt 52c.

Wird von der zurückgezogenen Stellung der Kontaktzunge 26 ausgegangen (siehe insbesondere Figur 10), so ist diese in der zurückgezogenen Stellung arretiert, da der zweite Vorsprung 52b bei einer Verschiebung der Kontaktzunge 26 in Richtung des Aufnahmebereichs 18 nicht kontaktlos die Rastkontur 48 passieren kann.

Wird die Kontaktzunge 26 jedoch mit einer ausreichenden Kraft bewegt, so kommt der zweite Vorsprung 52b zwar in Anlage an der Rastkontur 48, kann diese jedoch aufgrund der federnden Eigenschaften des Rastarms 50 in der Darstellung gemäß Figur 10 leicht nach oben bewegen und somit an der Rastkontur 48 vorbei gleiten.

Wenn der zweite Vorsprung 52 die Rastkontur 48 passiert hat, lässt sich die Kontaktzunge 26 so lange ohne Wechselwirkung mit der Rastkontur 48 bewegen, bis diese in Anlage am ersten Vorsprung 52a kommt.

Wird die Kontaktzunge 26 wieder mit einer ausreichenden Kraft weiter verschoben, so federt die Rastkontur 48 nochmals in der Darstellung gemäß Figur 10 nach oben weg, sodass der erste Vorsprung 52a an der Rastkontur 48 vorbeigleiten kann.

Danach ist die Kontaktzunge 26 in ihrer ausgefahrenen Stellung angelangt und dort arretiert, da für ein Zurückschieben der Kontaktzunge 26 wieder der Federwiderstand des Rastarms 50 überwunden werden müsste.

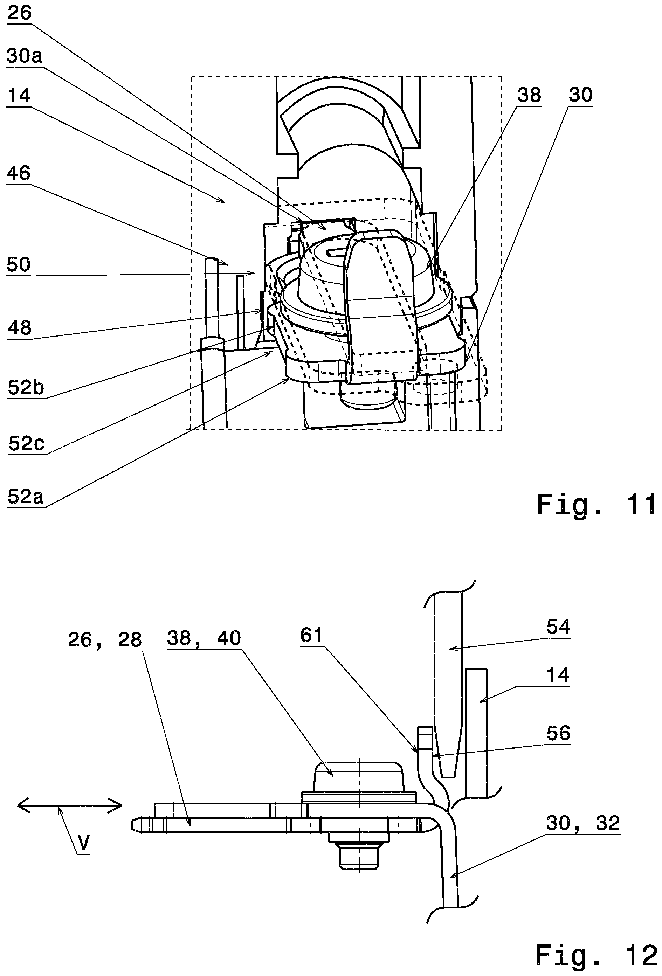

Die Kontaktzungen 26, 28 können gemäß zweier grundlegender Optionen verschoben werden, die im Folgenden anhand der Figuren 12 bis 15 erläutert werden.

Die erste Option besteht darin, die Kontaktzungen 26, 28 mittels eines Werkzeugs 54, das vorliegend ein Schraubendreher ist, zu verschieben. Die Spitze des Werkzeugs 54 wird dafür in einen Raum zwischen einem Abschnitt des Grundkörpers 14 und einer Angriffsfläche 56 der Kontaktzunge 26, 28 eingesetzt.

Dabei ist in der dargestellten Ausführungsform die Angriffsfläche 56 an einem einstückig mit der Kontaktzunge 26, 28 ausgebildeten Fortsatz vorgesehen und steht im Wesentlichen senkrecht auf einer Verschieberichtung V der Kontaktzungen 26, 28.

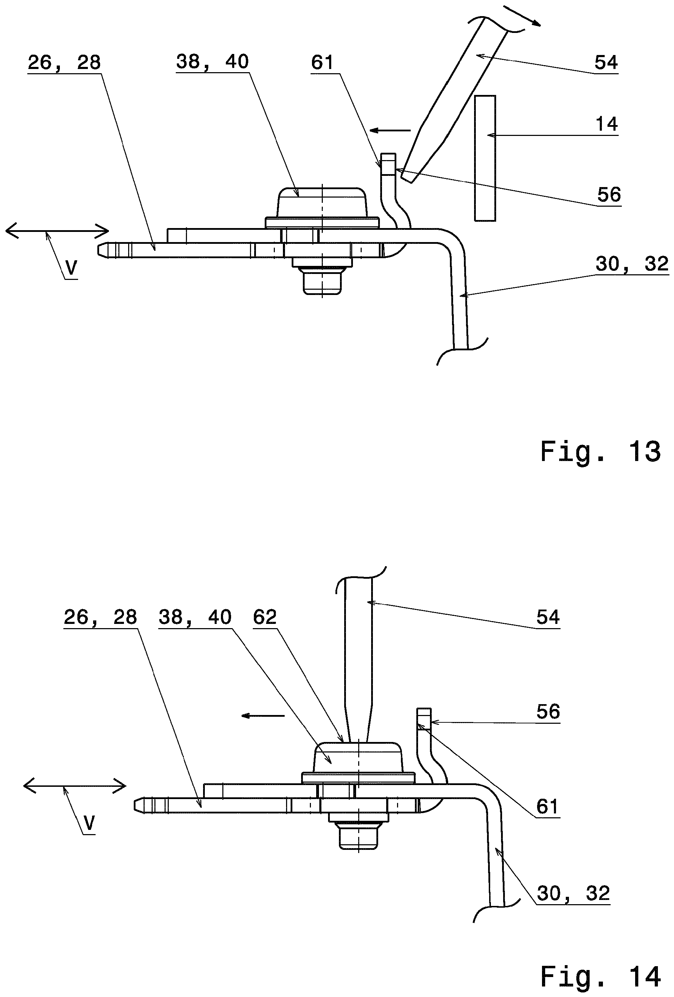

Das Werkzeug 54 kann nun unter Beibehaltung der Anlage an der Angriffsfläche 56 und dem Abschnitt des Grundkörpers 14 derart verschwenkt werden, dass die Kontaktzunge 26, 28 in Richtung des Aufnahmebereichs 18 verschoben wird (siehe Pfeile in Figur 13).

Dabei ist die Angriffsfläche 56 am Ende einer Vertiefung 60 des Grundkörpers 14 angeordnet. Mit anderen Worten ist die Angriffsfläche 56 innerhalb des Grundkörpers 14 versenkt. Dadurch kann die Angriffsfläche 56 ausschließlich mithilfe des Werkzeugs 54 erreicht werden und ist insbesondere nicht mit menschlichen Fingern zu erreichen. Die Angriffsfläche 56 ist somit berührgeschützt.

Um die Kontaktzunge 26, 28 in eine entgegengesetzte Richtung zu schieben, kann mit dem Werkzeug 54 an der Angriffsfläche 61 angegriffen werden.

Alternativ kann die Kontaktzunge 26, 28 über eine an dem jeweiligen Befestigungsmittel 38, 40 vorgesehene Angriffsfläche 62 verschoben werden.

Dabei ist in der dargestellten Ausführungsform die Angriffsfläche 62 gleichzeitig ein Bestandteil einer Angriffskontur für das Werkzeug 54, um das Befestigungsmittel 38, 40 zu betätigen.

In diesem Zusammenhang wird also das Werkzeug 54 an die Angriffsfläche 62 angelegt und zusammen mit dem Befestigungsmittel 38, 40, das in die zugehörige Kontaktzunge 26, 28 eingedreht ist, in Richtung Aufnahmebereich 18 oder vom Aufnahmebereich 18 weg verschoben (siehe Pfeil in Figur 14).

Vorstehend wurden zwei Überspannungsschutzbaugruppen 10, 42 erläutert, die jeweils eine identisch ausgebildete Überspannungsschutzvorrichtung 12 umfassen. Es versteht sich daher, dass Merkmale, Eigenschaften und Vorteile der Überspannungsschutzvorrichtung, die im Zusammenhang mit der Überspannungsschutzbaugruppe 10 erläutert wurden auch für die Überspannungsschutzvorrichtung 12 in der Überspannungsschutzbaugruppe 42 gelten und umgekehrt.

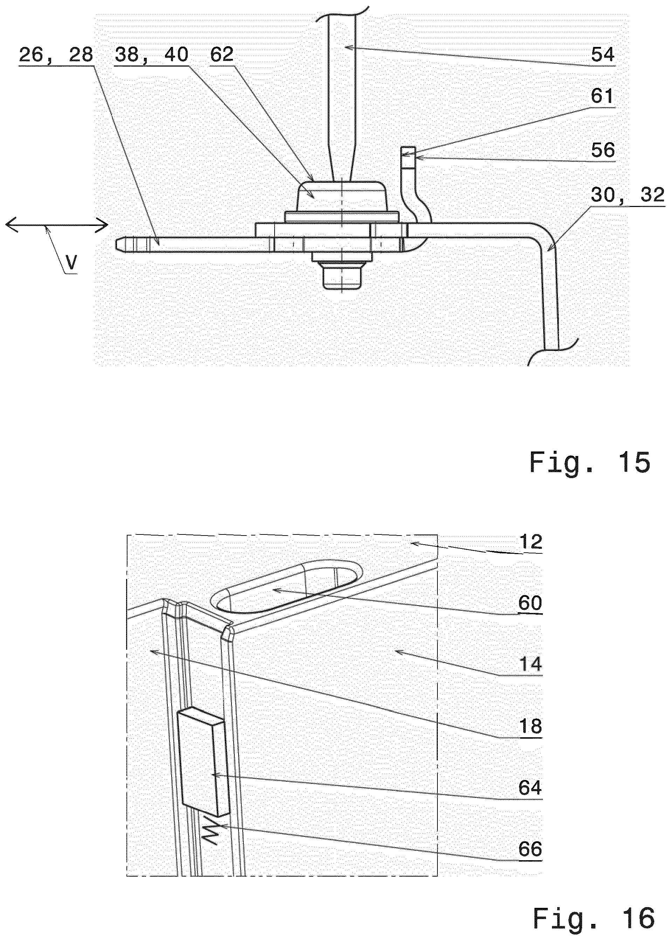

Eine alternative Ausführungsvariante der Überspannungsschutzvorrichtung 12 ist in den Figuren 16 bis 18 gezeigt.

Dabei ist eine Abdeckung 64, die vorliegend als Schieber ausgeführt ist, derart verschiebbar am Grundkörper 14 gelagert, dass sie eine zugeordnete Kontaktzunge 26, 28 in ihrer zurückgezogenen Stellung vom Aufnahmebereich 18 trennen kann. Die Kontaktzunge 26, 28 ist also weder mit den Händen, noch mittels eines Werkzeugs ausgehend vom Aufnahmebereich 18 erreichbar.

Zu diesem Zweck ist in der dargestellten Ausführungsform die Abdeckung 64 mittels einer Feder 66 in ihre Trennstellung vorgespannt, die in Figur 16 gezeigt ist.

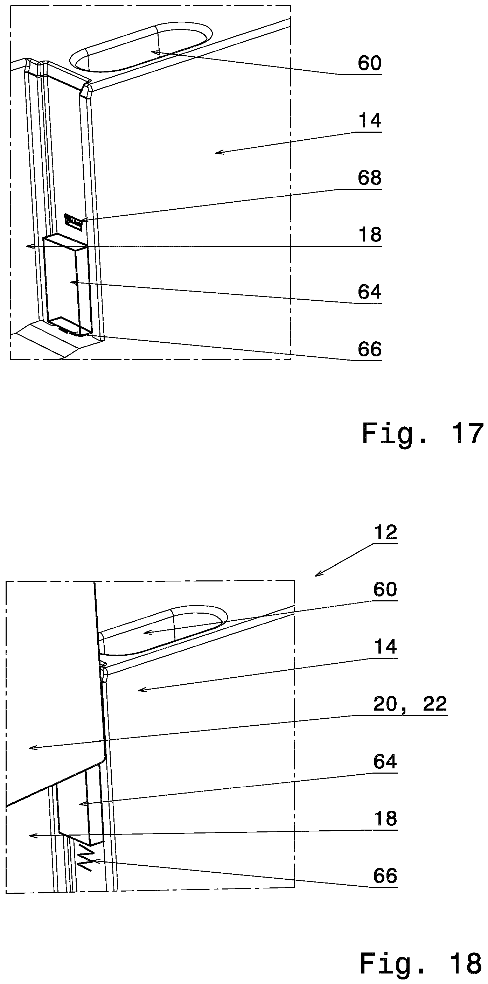

Dabei sind die Abdeckung 64 und die Feder 66 so konfiguriert, dass die Abdeckung 64 mittels eines in den Aufnahmebereich 18 eingeschobenen elektrotechnischen Anbauteils 20, das vorliegend wieder als Leitungsschutzschalter 22 ausgeführt ist, von der Trennstellung in ihre Freigabestellung überführt werden kann, die in Figur 17 gezeigt ist.

In der Freigabestellung gibt die Abdeckung 64 eine entsprechende Öffnung 68 im Grundkörper 14 frei, durch den sich die entsprechende Kontaktzunge 26, 28 in ihrer ausgefahrenen Stellung erstreckt, um das elektrotechnische Anbauteil 20 elektrisch zu kontaktieren und mechanisch zu sichern.

Für den Übergang von der Trennstellung in die Freigabestellung wird die Abdeckung 64 mittels des elektrotechnischen Anbauteils 20 entgegen der Vorspannungskraft der Feder 66 verschoben, wie aus Figur 18 hervorgeht. Hierdurch wird die Öffnung 68 entsprechend freigegeben.

In Abhängigkeit der Ausgestaltung des elektronischen Anbauteils 22 kann die Kontaktzunge 26, 28 dann direkt das elektronische Anbauteil 22 kontaktieren oder zunächst an einer Außenseite des elektronischen Anbauteils 22 anliegen, bis dieses soweit in den Aufnahmebereich 18 eingesetzt ist, dass eine seitliche Einführöffnung des elektronischen Anbauteils 22, auch als Kanal bezeichnet, mit der Öffnung 68 fluchtet, durch die sich die Kontaktzunge 26, 28 erstreckt.

Dann wird die Kontaktzunge 26, 28 entweder manuell oder aufgrund einer Federvorspannung automatisch in die Einführöffnung des elektronischen Anbauteils 22 verstellt, wodurch die Kontaktzunge 26, 28 das elektronische Anbauteil 22 elektrisch kontaktiert, insbesondere die entsprechenden Anschlusskontakte, und gleichzeitig das elektronische Anbauteil 22 mechanisch sichert.

Unabhängig davon, ob die Überspannungsschutzvorrichtung 12 gemäß der Figuren 1 bis 15 oder 16 bis 18 ausgebildet ist, lässt sich die Überspannungsschutzbaugruppe 10, die neben der Überspannungsschutzvorrichtung 12 das elektrotechnische Anbauteil 20 umfasst, folgendermaßen herstellen.

Zunächst wird die Überspannungsschutzvorrichtung 12 vorgesehen, wobei sich die Kontaktzungen 26, 28 bereits in ihrer zurückgezogenen Stellung befinden oder in die zurückgezogenen Stellungen überführt werden.

Das Überführen der Kontaktzungen 26, 28 in die jeweils zurückgezogene Stellung kann dabei analog zu den Darstellungen in den Figuren 12 bis 15 erfolgen, wobei entweder die Angriffsfläche 62 am jeweils zugeordneten Befestigungsmittel 38,40 oder die Angriffsfläche 61. Auch kann ein selbsttätiges Überführen stattfinden, sofern eine entsprechende Feder vorgesehen ist, die die Kontaktzungen 26, 28 in die jeweils zurückgezogene Stellung beaufschlagt.

Danach wird das elektrotechnische Anbauteil 20 im Aufnahmebereich 18 des Grundkörpers 14 angeordnet. Dies ist leicht möglich, da ja die Kontaktzungen 26, 28 vollständig innerhalb des Grundkörpers 14 aufgenommen sind, sodass er Aufnahmebereich 18 vollständig freigegeben ist.

Darauf folgend werden die Kontaktzungen 26, 28 in ihre ausgefahrenen Stellungen überführt. Dies erfolgt, indem das jeweils zugeordnete Befestigungsmittel 38,40 gelöst wird und die Kontaktzungen 26, 28 in Richtung des Aufnahmebereichs 18 verschoben werden, wie in den Figuren 12 bis 15 dargestellt. Die Kontaktzungen 26, 28 können manuell verschoben werden oder selbsttätig, sofern entsprechende Federn vorgesehen sind, die die Kontaktzungen 26, 28 in ihre ausgefahrenen Stellungen beaufschlagen.

In der ausgefahrenen Stellung kontaktieren die Kontaktzungen 26, 28 einerseits das elektrotechnische Anbauteil 20 in elektrischer Hinsicht.

Andererseits sichern sie das Anbauteil 20 auch in mechanischer Hinsicht über einen Formschluss, da sie ja, wie bereits erläutert, in Kanäle an den Seitenflächen 22a, 22b des Anbauteils 20 eingreifen.

Die Kontaktzungen 26, 28 werden in der ausgefahrenen Stellung mittels der Befestigungsmittel 38,40 festgelegt.

Wie oben bereits erläutert, kann die Kontaktierung des elektrotechnischen Anbauteils 20 selbsttätig erfolgen, sofern das elektrotechnische Anbauteil 20 die federvorgespannte Abdeckung 66 in die Freigabestellung überführt, wodurch die Öffnung 68 freigegeben wird, sodass die federbelasteten Kontaktzungen 26, 28 ebenfalls ihre ausgefahrenen Stellungen einnehmen können, sobald die Einführöffnungen des elektrotechnischen Anbauteils 20 mit den Öffnungen 68 fluchten.

Grundsätzlich ist somit eine Überspannungsschutzvorrichtung 12 vorgesehen, die wahlweise mit einem elektrotechnischen Anbauteil versehen werden kann, um ein an einem Versorgungsanschluss vorgesehenes elektrisches Bauteil platzsparend und berührungssicher abzusichern.

## Patentansprüche

1. Überspannungsschutzvorrichtung (12) zur Absicherung eines Niederspannungsversorgungssystems eines Bauwerks gegen Überspannungen, mit
einem Grundkörper (14), an dem eine Schnittstelle (16) zur elektrischen und mechanischen Kopplung der Überspannungsschutzvorrichtung (12) mit einem mehrere Stromschienen umfassenden Sammelschienensystem vorgesehen ist, und
einem am Grundkörper (14) angeordneten Aufnahmebereich (18), in dem wahlweise ein elektrotechnisches Anbauteil (20) aufnehmbar ist,
**dadurch gekennzeichnet, dass** am Grundkörper (14) zumindest eine Kontaktzunge (26, 28) vorgesehen ist, die dazu ausgebildet ist, das wahlweise im Aufnahmebereich (18) anordenbare elektrotechnische Anbauteil (20) elektrisch zu kontaktieren und mechanisch zu sichern, wobei die Kontaktzunge (26, 28) verschiebbar am Grundkörper (14) gelagert ist.

2. Überspannungsschutzvorrichtung (12) nach Anspruch 1, **dadurch gekennzeichnet, dass** die Kontaktzunge (26, 28) in einer ausgefahrenen Stellung zumindest abschnittsweise in den Aufnahmebereich (18) ragt und in einer zurückgezogenen Stellung vollständig innerhalb des Grundkörpers (14) aufgenommen ist.

3. Überspannungsschutzvorrichtung (12) nach Anspruch 2, **dadurch gekennzeichnet, dass** die Kontaktzunge (26, 28) in der zurückgezogenen Stellung durch eine beweglich am Grundkörper (14) gelagerte Abdeckung (64) vom Aufnahmebereich (18) getrennt ist.

4. Überspannungsschutzvorrichtung (12) nach Anspruch 2 oder 3, **gekennzeichnet durch** eine Rastvorrichtung (46), die dazu ausgebildet ist, die Kontaktzunge (26, 28) in der ausgefahrenen Stellung und/oder in der zurückgezogenen Stellung zu arretieren.

5. Überspannungsschutzvorrichtung (12) nach Anspruch 4, **dadurch gekennzeichnet, dass** die Rastvorrichtung (46) eine am Grundkörper (14) angeordnete Rastkontur (48) und eine an der Kontaktzunge (26, 28) ausgebildete Rastgegenkontur (52) umfasst, insbesondere wobei die Rastkontur (48) in Richtung der Rastgegenkontur (52) federnd gelagert ist.

6. Überspannungsschutzvorrichtung (12) nach einem der vorhergehenden Ansprüche, **gekennzeichnet durch** eine Fixiereinheit (34, 36), die dazu ausgebildet ist, die Kontaktzunge (26, 28) in einer beliebigen Verschiebestellung festzulegen.

7. Überspannungsschutzvorrichtung (12) nach Anspruch 6, **dadurch gekennzeichnet, dass** die Fixiereinheit (34, 36) ein Befestigungsmittel (38, 40), insbesondere eine Befestigungsschraube, umfasst, mittels dem die Kontaktzunge (26, 28) an einer innerhalb des Grundkörpers (14) feststehenden Kontaktbasis (30, 32) wahlweise festlegbar ist und mittels dem eine Verschiebung der Kontaktzunge (26, 28) gegenüber der feststehenden Kontaktbasis (30, 32) wahlweise freigebbar ist.

8. Überspannungsschutzvorrichtung (12) nach einem der vorhergehenden Ansprüche, **dadurch gekennzeichnet, dass** an der Kontaktzunge (26, 28) eine Angriffsfläche (56, 61) vorgesehen ist, die zum Verschieben der Kontaktzunge (26, 28) am Grundkörper (14) ausgebildet ist.

9. Überspannungsschutzvorrichtung (12) nach einem der vorhergehenden Ansprüche, **dadurch gekennzeichnet, dass** die Kontaktzunge (26, 28) federbeaufschlagt verschiebbar am Grundkörper (14) vorgesehen ist.

10. Überspannungsschutzvorrichtung (12) nach einem der vorhergehenden Ansprüche, **dadurch gekennzeichnet, dass** am Grundkörper (14) ein elektrischer Versorgungsanschluss (24) angeordnet ist, insbesondere wobei der elektrische Versorgungsanschluss (24) mit der Kontaktzunge (26, 28) elektrisch in Reihe geschaltet ist.

11. Überspannungsschutzvorrichtung (12) nach einem der vorhergehenden Ansprüche, **dadurch gekennzeichnet, dass** zwei verschiebbar am Grundkörper (14) gelagerte Kontaktzungen (26, 28) vorgesehen sind, insbesondere wobei die Kontaktzungen (26, 28) an entgegengesetzten Enden des Aufnahmebereichs (18) angeordnet sind.

12. Überspannungsschutzbaugruppe (10) mit einer Überspannungsschutzvorrichtung (12) nach einem der vorhergehenden Ansprüche und einem elektrotechnischen Anbauteil (20), das zumindest teilweise im Aufnahmebereich (18) des Grundkörpers (14) aufgenommen und über die zumindest eine Kontaktzunge (26, 28) elektrisch mit der Überspannungsschutzvorrichtung (12) gekoppelt und mechanisch gesichert ist, wobei sich die zumindest eine Kontaktzunge (26, 28) in ihrer ausgefahrenen Stellung befindet.

13. Überspannungsschutzbaugruppe (10) nach Anspruch 12, **dadurch gekennzeichnet, dass** das elektrotechnische Anbauteil (20) ein Leitungsschutzschalter (22) oder eine Überstromschutzeinrichtung ist.

14. Überspannungsschutzbaugruppe (42) mit einer Überspannungsschutzvorrichtung (12) nach einem der Ansprüche 1 bis 11 und einem Blindmodul (44), das zumindest teilweise im Aufnahmebereich (18) des Grundkörpers (14) aufgenommen ist, wobei sich die zumindest eine Kontaktzunge (26, 28) in ihrer zurückgezogenen Stellung befindet.

15. Verfahren zur Montage einer Überspannungsschutzbaugruppe (10) nach Anspruch 12 oder 13, mit den folgenden Schritten:
a) Vorsehen einer Überspannungsschutzvorrichtung (12) nach einem der Ansprüche 1 bis 11, wobei sich die Kontaktzunge (26, 28) in ihrer zurückgezogenen Stellung befindet oder in ihre zurückgezogene Stellung überführt wird,
b) anschließendes Anordnen des elektrotechnischen Anbauteils (20) im Aufnahmebereich (18) des Grundkörpers (14) der Überspannungsschutzvorrichtung (12), und
c) darauffolgendes Überführen der Kontaktzunge (26, 28) in ihre ausgefahrene Stellung, sodass das elektrotechnische Anbauteil (20) elektrisch mit der Überspannungsschutzvorrichtung (12) gekoppelt und mechanisch gesichert wird.

## Claims

1. An overvoltage protection device (12) for protecting a low-voltage supply system of a building against overvoltages, comprising
a base body (14), on which an interface (16) is provided for electrical and mechanical coupling of the overvoltage protection device (12) to a busbar system comprising a plurality of busbars, and
a receiving area (18) which is arranged on the base body (14) and in which an electrotechnical add-on part (20) can optionally be received,
**characterized in that** at least one contact tongue (26, 28) is provided on the base body (14), which is configured to electrically contact and mechanically secure the electrotechnical add-on part (20) which can optionally be arranged in the receiving area (18), the contact tongue (26, 28) being displaceably mounted on the base body (14).

2. The overvoltage protection device (12) according to claim 1, **characterized in that** the contact tongue (26, 28) projects at least in sections into the receiving area (18) in an extended position and is fully received within the base body (14) in a retracted position.

3. The overvoltage protection device (12) according to claim 2, **characterized in that** when in the retracted position, the contact tongue (26, 28) is separated from the receiving area (18) by a cover (64) movably mounted on the base body (14).

4. The overvoltage protection device (12) according to claim 2 or 3, **characterized by** a latching device (46) which is configured to lock the contact tongue (26, 28) in the extended position and/or in the retracted position.

5. The overvoltage protection device (12) according to claim 4, **characterized in that** the latching device (46) comprises a latching contour (48) arranged on the base body (14) and a latching counter-contour (52) formed on the contact tongue (26, 28), in particular wherein the latching contour (48) is resiliently mounted in the direction of the latching counter-contour (52).

6. The overvoltage protection device (12) according to any of the preceding claims, **characterized by** a fixing unit (34, 36) which is configured to fix the contact tongue (26, 28) in any desired displacement position.

7. The overvoltage protection device (12) according to claim 6, **characterized in that** the fixing unit (34, 36) comprises a fastening means (38, 40), in particular a fastening screw, by means of which the contact tongue (26, 28) can be selectively fixed to a contact base (30, 32) fixed within the base body (14) and by means of which a displacement of the contact tongue (26, 28) relative to the fixed contact base (30, 32) can be selectively enabled.

8. The overvoltage protection device (12) according to any of the preceding claims, **characterized in that** an engagement surface (56, 61) is provided on the contact tongue (26, 28), which is designed to displace the contact tongue (26, 28) on the base body (14).

9. The overvoltage protection device (12) according to any of the preceding claims, **characterized in that** the contact tongue (26, 28) is provided on the base body (14) so as to be displaceable in a spring-loaded manner.

10. The overvoltage protection device (12) according to any of the preceding claims, **characterized in that** an electrical supply connection (24) is arranged on the base body (14), in particular wherein the electrical supply connection (24) is electrically connected in series with the contact tongue (26, 28).

11. The overvoltage protection device (12) according to any of the preceding claims, **characterized in that** two contact tongues (26, 28) are provided which are displaceably mounted on the base body (14), in particular wherein the contact tongues (26, 28) are arranged at opposite ends of the receiving area (18).

12. An overvoltage protection assembly (10) comprising an overvoltage protection device (12) according to any of the preceding claims and an electrotechnical add-on part (20), which is at least partly received in the receiving area (18) of the base body (14) and is electrically coupled to the overvoltage protection device (12) by means of the at least one contact tongue (26, 28) and is mechanically secured, the at least one contact tongue (26, 28) being in its extended position.

13. The overvoltage protection assembly (10) according to claim 12, **characterized in that** the electrotechnical add-on part (20) is a circuit breaker (22) or an overcurrent protection device.

14. An overvoltage protection assembly (42) comprising an overvoltage protection device (12) according to any of claims 1 to 11 and a dummy module (44) which is at least partly received in the receiving area (18) of the base body (14), the at least one contact tongue (26, 28) being in its retracted position.

15. A method of assembling an overvoltage protection assembly (10) according to claim 12 or 13, comprising the following steps:
(a) providing an overvoltage protection device (12) according to any of claims 1 to 11, wherein the contact tongue (26, 28) is in its retracted position or is transferred to its retracted position;
(b) subsequently arranging the electrotechnical add-on part (20) in the receiving area (18) of the base body (14) of the overvoltage protection device (12); and
(c) subsequently transferring the contact tongue (26, 28) to its extended position, so that the electrotechnical add-on part (20) is electrically coupled to the overvoltage protection device (12) and mechanically secured.

## Revendications

1. Dispositif de protection contre les surtensions (12) pour protéger un système d'alimentation basse tension d'un bâtiment contre les surtensions, comprenant
un corps de base (14) sur lequel est prévue une interface (16) pour le couplage électrique et mécanique du dispositif de protection contre les surtensions (12) avec un système de barres omnibus comprenant plusieurs barres omnibus, et
une zone de réception (18) disposée sur le corps de base (14), dans laquelle un composant électrotechnique (20) peut être logé au choix,
**caractérisé en ce qu'**au moins une languette de contact (26, 28) est prévue sur le corps de base (14), laquelle est conçue pour établir un contact électrique avec l'élément électrotechnique (20) pouvant être disposé au choix dans la zone de réception (18) et le fixer mécaniquement, la languette de contact (26, 28) étant montée de manière coulissante sur le corps de base (14).

2. Dispositif de protection contre les surtensions (12) selon la revendication 1, **caractérisé en ce que** la languette de contact (26, 28) dépasse au moins par sections dans la zone de réception (18) lorsqu'elle est en position sortie et est complètement logée à l'intérieur du corps de base (14) lorsqu'elle est en position rentrée.

3. Dispositif de protection contre les surtensions (12) selon la revendication 2, **caractérisé en ce que** la languette de contact (26, 28) est séparée de la zone de réception (18) en position rétractée par un couvercle (64) monté de manière mobile sur le corps de base (14).

4. Dispositif de protection contre les surtensions (12) selon la revendication 2 ou 3, **caractérisé par** un dispositif d'encliquetage (46) qui est conçu pour bloquer la languette de contact (26, 28) en position sortie et/ou en position rentrée.

5. Dispositif de protection contre les surtensions (12) selon la revendication 4, **caractérisé en ce que** le dispositif d'encliquetage (46) comprend un contour d'encliquetage (48) disposé sur le corps de base (14) et un contre-contour d'encliquetage (52) formé sur la languette de contact (26, 28), le contour d'encliquetage (48) étant en particulier monté de manière élastique en direction du contre-contour d'encliquetage (52).

6. Dispositif de protection contre les surtensions (12) selon l'une des revendications précédentes, **caractérisé par** une unité de fixation (34, 36) qui est conçue pour fixer la languette de contact (26, 28) dans une position de déplacement quelconque.

7. Dispositif de protection contre les surtensions (12) selon la revendication 6, **caractérisé en ce que** l'unité de fixation (34, 36) comprend un moyen de fixation (38, 40), en particulier une vis de fixation, au moyen duquel la languette de contact (26, 28) peut être fixée au choix sur une base de contact (30, 32) fixe à l'intérieur du corps de base (14) et au moyen duquel un déplacement de la languette de contact (26, 28) par rapport à la base de contact fixe (30, 32) peut être libéré au choix.

8. Dispositif de protection contre les surtensions (12) selon l'une des revendications précédentes, **caractérisé en ce qu'**une surface d'attaque (56, 61) est prévue sur la languette de contact (26, 28), laquelle est conçue pour déplacer la languette de contact (26, 28) sur le corps de base (14).

9. Dispositif de protection contre les surtensions (12) selon l'une des revendications précédentes, **caractérisé en ce que** la languette de contact (26, 28) est prévue de manière à pouvoir coulisser sur le corps de base (14) en s'enclenchant par ressort.

10. Dispositif de protection contre les surtensions (12) selon l'une des revendications précédentes, **caractérisé en ce qu'**un raccord d'alimentation électrique (24) est disposé sur le corps de base (14), en particulier le raccord d'alimentation électrique (24) étant connecté électriquement en série avec la languette de contact (26, 28).

11. Dispositif de protection contre les surtensions (12) selon l'une des revendications précédentes, **caractérisé en ce que** deux languettes de contact (26, 28) montées de manière coulissante sur le corps de base (14) sont prévues, les languettes de contact (26, 28) étant disposées en particulier aux extrémités opposées de la zone de réception (18).

12. Module de protection contre les surtensions (10) avec un dispositif de protection contre les surtensions (12) selon l'une des revendications précédentes et un composant électrotechnique (20), qui est logé au moins partiellement dans la zone de réception (18) du corps de base (14) et qui est couplé électriquement au dispositif de protection contre les surtensions (12) et fixé mécaniquement par l'intermédiaire d'au moins une languette de contact (26, 28), ladite au moins une languette de contact (26, 28) se trouvant dans sa position déployée.

13. Module de protection contre les surtensions (10) selon la revendication 12, **caractérisé en ce que** l'élément électrotechnique rapporté (20) est un disjoncteur de protection de ligne (22) ou un dispositif de protection contre les surintensités.

14. Module de protection contre les surtensions (42) avec un dispositif de protection contre les surtensions (12) selon l'une des revendications 1 à 11 et un module factice (44) qui est logé au moins en partie dans la zone de réception (18) du corps de base (14), la languette de contact (26, 28) au moins au nombre de une se trouvant dans sa position rétractée.

15. Procédé de montage d'un module de protection contre les surtensions (10) selon la revendication 12 ou 13, comprenant les étapes suivantes :
a) prévoir un dispositif de protection contre les surtensions (12) selon l'une des revendications 1 à 11, la languette de contact (26, 28) se trouvant dans sa position rétractée ou étant amenée dans sa position rétractée,
b) placer ensuite l'élément électrotechnique rapporté (20) dans la zone de réception (18) du corps de base (14) du dispositif de protection contre les surtensions (12), et
c) transférer ensuite la languette de contact (26, 28) dans sa position déployée, de sorte que l'élément électrotechnique rapporté (20) soit couplé électriquement au dispositif de protection contre les surtensions (12) et fixé mécaniquement.
